# EUROPÄISCHE PATENTSCHRIFT

(11) **EP 1 117 702 B1**
(45) Veröffentlichungstag und Bekanntmachung des Hinweises auf die Patenterteilung: **03.03.2004**
(21) Anmeldenummer: 99944415.1
(22) Anmeldetag: 17.08.1999
(51) Int. Cl.: C08F 6/00

(54) **VERFAHREN ZUR VERMINDERUNG DER RESTMONOMERENMENGE IN WÄSSRIGEN POLYMERDISPERSIONEN**
METHOD FOR REDUCING THE QUANTITY OF RESIDUAL MONOMERS IN AQUEOUS POLYMERIC DISPERSIONS
PROCEDE POUR REDUIRE LA QUANTITE DE MONOMERES RESIDUELS DANS DES DISPERSIONS POLYMERES AQUEUSES

(30) Priorität: 28.08.1998 DE 19839199
(43) Veröffentlichungstag der Anmeldung: 25.07.2001
(73) Patentinhaber: BASF AKTIENGESELLSCHAFT, 67056 Ludwigshafen (DE)
(72) Erfinder: WOOD, Claudia, D-69469 Weinheim (DE); BAUMSTARK, Roland, D-67434 Neustadt (DE); DOBBELAAR, Johannes, D-67157 Wachenheim (DE)
(86) Internationale Anmeldenummer: PCT/EP1999/006010
(87) Internationale Veröffentlichungsnummer: WO 2000/012569

(56) Entgegenhaltungen:
- EP-A- 0 590 468
- EP-A- 0 767 180
- DE-A- 4 419 518

## Beschreibung

Die Erfindung betrifft ein Verfahren zur Verminderung der Restmonomerenmenge in wässrigen Polymerdispersionen durch chemische Nachbehandlung mit einem speziellen Redoxinitiatorsystem.

Wässrige Polymerdispersionen enthalten nach ihrer Herstellung durch radikalische Polymerisation oder Copolymerisation neben einem Polymer-Feststoffanteil von 30 bis 75 Gew.-% aufgrund der unvollständigen Polymerisation der eingesetzten Monomeren in der radikalischen Hauptpolymerisation, die meist bis zu einem Monomerenumsatz von 95 und bevorzugt von 98 bis 99 Gew.-% geführt wird, noch einen unerwünschten Anteil an nichtpolymerisierten freien Monomeren ("Restmonomere"). Aus meist toxikologischen Gründen fordert der Markt wässrige Polymersysteme mit einem niedrigen Gehalt an Restmonomeren bei gleichbleibenden Verarbeitungs- und Anwendungseigenschaften.

Neben nichtchemischen Methoden stehen unterschiedlichste chemische Methoden zur Absenkung von Restmonomerengehalten wässriger Polymerdispersionen zur Verfügung.

EP-B 563 726 lehrt für die Reduktion des Restmonomerengehaltes in wässrigen Dispersionen auf Polyvinylesterbasis ein Verfahren, bei dem man die monomeren Vinylestereinheiten durch selektive Verseifung in die Carboxylate und Acetaldehyd spaltet und bei erhöhter Temperatur den Acetaldehyd, oder vorzugsweise gleichzeitig unverseifte restmonomere Vinylester und Acetaldehyd abdestilliert.

Gemäß US-A 4 529 753 erfolgt die Reduzierung der Restmonomerengehalte in wässrigen Polymerdispersionen mit einem Redoxsystem, bestehend aus einem radikalbildenden Oxidationsmittel, wie beispielsweise einem organischen Peroxid, einem Reduktionsmittel, wie beispielsweise reduzierenden Zucker- oder Schwefelverbindungen sowie einem Übergangsmetallsalz bei vermindertem Druck.

Laut EP-B 003 957 läßt sich der Reststyrolgehalt in Styrollatices durch einen sekundären Redox-Katalysator, bestehend aus einem organischen Hydroperoxid und einem Aktivator wie beispielsweise Diethylentriamin, Triethylentetramin oder Tetraethylenpentamin, herabsetzen.

In EP-B 028 348 wird ein Verfahren zur Verringerung von Restacrylnitril in Polyacryl-Homo-/Copolymerisaten beschrieben, in dem ein Comonomer, das mit Acrylnitril copolymerisierbar ist, und ein Redox-Katalysator, bestehend aus einem organischen Peroxid und einer reduzierenden Schwermetallverbindung, zur Abreicherung eingesetzt werden.

Die DE-A 195 29 599 empfiehlt zur Herstellung von wässrigen Polymerdispersionen mit niedrigen Restmonomerengehalten eine Nachbehandlungsstufe, die im wesentlichen ein Redox-Initiatorsystem, bestehend aus einem anorganischen Oxidationsmittel und einer Thiocarbonsäure sowie deren Alkali- und Ammoniumsalze umfaßt und die in einem pH-Bereich von 6 bis 10 durchgeführt wird.

EP-A 764 699 offenbart die Nachbehandlung wässriger Polymerdispersionen mittels tert.-Butylhydroperoxid, Isoascorbinsäure, Eisen-(II)-sulfat und dem Natriumsalz der Ethylendiamintetraessigsäure.

Breite Anwendung als Reduktionsmittel finden innerhalb der Redoxsysteme Hydroxymethansulfinsäure und deren Salze.

So empfiehlt die DE-A 38 34 734 den Gehalt an Restmonomeren von wässrigen Polymerisatdispersionen dadurch herabzusetzen, indem man nach Beendigung der Hauptpolymerisationsreaktion ein radikalisches Redoxinitiatorsystem einwirken läßt, dessen Oxidationsmittel organische Peroxide, wie beispielsweise Acetylperoxid oder tert.-Butylhydroperoxid und dessen Reduktionsmittel eine Sulfinsäure oder deren Alkalimetallsalze, wie beispielsweise das Natriumhydroxymethansulfinat sowie Eisen- und Vanadinsalze umfaßt.

Zur Abreicherung von Restmonomeren in Methacrylsäuremethylester/Acrylsäure-n-butylester-Dispersionen wird in DE-A 37 18 520 die Nachpolymerisation mit dem Redoxsystem tert.-Butylhydroperoxid/Natriumhydroxymethansulfinat und anschließende Vakuumdestillation vorgeschlagen.

Gemäß der DE-A 42 32 194 werden für die Reduzierung von Restmonomeren in Perlpolymerisat-Systemen wasserlösliche Redoxinitiatorsysteme verwendet, die aus Oxidationsmitteln, wie beispielsweise Wasserstoffperoxid, Ammoniumpersulfat oder tert.-Butylhydroperoxid, Reduktionsmitteln, wie beispielsweise Disulfite, Dithionite, Sulfite oder Thiosulfate in Form wasserlöslicher Salze sowie Natriumhydroxymethansulfinat und Übergangsmetallverbindungen aufgebaut sind.

Für den Einsatz von Carbonylverbindungen bzw. deren Umsetzungsprodukten in der Nachbehandlung von wässrigen Polymerdispersionen muß von folgendem Stand der Technik ausgegangen werden.

Gemäß WO 95/33775 können zur Nachbehandlung von wässrigen Polymerdispersionen Redoxsysteme eingesetzt werden, deren Reduktionsmittel ein Addukt aus Hydrogensulfitanion und einem Keton mit 3 bis 8 C-Atomen und/oder die konjugierte Säure dieses Addukts umfaßt. Die Nachbehandlung wird in Anwesenheit von im wässrigen Medium löslichen Metallverbindungen vorgenommen.

Die EP-A 767 180 empfiehlt für die Reduktion von Restmonomerengehalten ein Redox-Initiatorsystem aus organischen Hydroperoxiden, die nicht oder nur sehr schlecht in Wasser löslich sind und u.a. Addukten aus Aldehyden mit einer C-Kette mit 4 bis 6 C-Atomen und Bisulfiten.

Der vorliegenden Erfindung lag die Aufgabe zugrunde, ein neues wirksames Verfahren zur Verminderung der Restmonomerenmenge in wässrigen Polymerdispersionen bereitzustellen. Außerdem soll die Verminderung der Restmonomerenmenge ohne Bildung von Mikrokoagulat erfolgen und sich leicht technisch nutzen lassen.

Es wurde nun gefunden, daß sich die Menge an Restmonomeren in wässrigen Polymerdispersionen wirksam vermindern läßt, wenn man die Nachbehandlung der Restmonomere enthaltenden wässrigen Polymerdispersionen unter Zugabe eines Redoxinitiatorensystems durchführt, das im wesentlichen
a) 0,001 bis 5 Gew.-%, bezogen auf die zur Herstellung der Polymerdispersion verwendeten Gesamtmonomerenmenge
   a₁) eines Oxidationsmittels

      R¹OOH,

      worin R¹ Wasserstoff, eine C₁- bis C₈-Alkyl- oder eine C₆- bis C₁₂-Arylgruppe bedeutet, und/oder
   a₂) einer in wässrigem Medium Wasserstoffperoxid freisetzende Verbindung, und
b) 0,005 bis 5 Gew.-%, bezogen auf die zur Herstellung der Polymerdispersion verwendeten Gesamtmonomerenmenge eines Reduktionsmittels, hergestellt aus
   b₁) einem Aldehyd

      R²CH=O,

      worin R² eine C₁- bis C₁₂-Alkylgruppe bedeutet, die funktionelle Gruppen enthalten und/oder olefinisch ungesättigt sein kann, und
   b₂) einem anorganischen Dithionit und
c) katalytischen Mengen eines mehrwertigen Metallions, das in mehreren Wertigkeitsstufen auftreten kann
umfaßt.

Das Oxidationsmittel des Redox-Initiatorsystems soll in der Lage sein, Radikale zu bilden. Im Redoxsystem wird bevorzugt Wasserstoffperoxid als Oxidationsmittel eingesetzt, aber auch Kaliumperoxid, Natriumperoxid, Natriumperborat sowie weitere in wässrigem Medium Wasserstoffperoxid bildende Vorstufen. Ferner können beispielsweise auch Ammonium-, Kalium- oder Natriumpersulfat, Peroxydischwefelsäure und deren Salze, Ammonium-, Kalium- oder Natriumperphosphat oder -diperphosphat, Kaliumpermanganat und andere Salze von Persäuren eingesetzt werden. Prinzipiell ebenfalls geeignet sind organische Hydroperoxide, wie beispielsweise tert.-Butylhydroperoxid und Cumolhydroperoxid. Es ist jedoch auch möglich, Gemische verschiedener Oxidationsmittel einzusetzen.

Die Menge an zugesetztem Oxidationsmittel liegt üblicherweise im Bereich von 0,001 bis 5, bevorzugt bei 0,002 bis 3, besonders bevorzugt bei 0,003 bis 2, ganz besonders bevorzugt bei 0,01 bis 1 und vorzugsweise bei 0,02 bis 0,5 Gew.-%, bezogen auf die Gesamtmonomerenmenge.

Als Reduktionsmittel sind in der Regel Umsetzungsprodukte aus Aldehyden, insbesondere aliphatischen Alkyl-, Cycloalkyl-, Alkylaryl- und Aryl-Aldehyden mit 2 bis 13 C-Atomen, wie beispielsweise Ethanal, Propanal, Butanal, Methylpropanal, Pentanal, 2-Methylbutanal, 3-Methylbutanal, Hexanal, 2-Methylpentanal, 3-Methylpentanal, 4-Methylpentanal, 2-Ethylbutanal, Heptanal, 2-Methylhexanal, 3-Methylhexanal, 4-Methylhexanal, 5-Methylhexanal, 2-Ethylpentanal, 3-Ethylpentanal, Octanal, 2-Methylheptanal, 3-Methylheptanal, 4-Methylheptanal, 5-Methylheptanal, 6-Methylheptanal, 2-Ethylhexanal, 3-Ethylhexanal, 4-Ethylhexanal, 2-n-Propylpentanal, 2-iso-Propylpentanal, Nonanal, Decanal, Undecanal, Dodecanal, Cyclopentylmethanal, Cyclohexylmethanal, Cyclopentylethanal, Cyclohexylethanal, Phenylmethanal und Phenylethanal sowie deren isomeren und/oder mit funktionellen Gruppen substituierten und/oder olefinisch ungesättigten Verbindungen und Gemische davon mit anorganischen Dithioniten, wie beispielsweise Natriumdithionit, Kaliumdithionit, Magnesiumdithionit, Calciumdithionit, Strontiumdithionit, Bariumdithionit und Zinkdithionit oder Gemische davon geeignet.

Aldehyde und Dithionite können im molaren Verhältnis von 0,1 zu 1 bis 1 zu 0,1, bevorzugt von 0,3 zu 1 bis 1 zu 0,3, besonders bevorzugt 0,5 zu 1 bis 1 zu 0,5 und ganz besonders bevorzugt 1 zu 0,5 eingesetzt werden. Dabei werden insbesondere solche Aldehyd/Dithionit-Reduktionsmittel bevorzugt, die eine ausreichende Löslichkeit in wässrigen Medien aufweisen. Bevorzugt werden daher Reduktionsmittel, hergestellt aus Methanal, Ethanal, Propanal, Butanal und/oder Pentanal sowie Natrium- und Kaliumdithionit und besonders bevorzugt Reduktionsmittel aus Ethanal und/oder Propanal mit Natriumdithionit und ganz besonders Reduktionsmittel aus Ethanal und Natriumdithionit verwendet. Die Herstellung des Reduktionsmittels erfolgt dabei bevorzugt vor der Nachbehandlung in einer separaten Reaktionsstufe.

Die Menge an zugesetztem Reduktionsmittel liegt üblicherweise im Bereich von 0,005 bis 5 bevorzugt bei 0,01 bis 3, besonders bevorzugt bei 0,03 bis 2 und ganz besonders bevorzugt bei 0,05 bis 1 Gew.-%, bezogen auf die Gesamtmonomerenmenge. Auch höhere Mengen an Reduktionsmittel sind möglich, in der Regel aber wirtschaftlich nicht sinnvoll.

Die für die Nachbehandlung vorteilhaften Metallverbindungen sind üblicherweise vollständig im wässrigen Medium der Polymer-dispersion löslich und deren metallische Komponente darüber hinaus in der Lage, in mehreren Wertigkeitsstufen vorliegen zu können. Die gelösten Metallionen wirken katalytisch und unterstützen die Elektronenübertragungsreaktionen zwischen den eigentlich wirksamen Oxidations- und Reduktionsmitteln. Als gelöste Metallionen kommen prinzipiell Eisen-, Kupfer-, Mangan-, Vanadin-, Nickel-, Cobalt-, Titan-, Cer- oder Chromionen in Betracht. Selbstverständlich ist es auch möglich, Gemische verschiedener, sich nicht störender Metallionen, wie beispielsweise das System Fe^{2/3+} / VSO₄⁻, zu verwenden. Bevorzugt werden Eisenionen eingesetzt.

Die gelösten Metallionen werden in katalytischen Mengen, üblicherweise im Bereich 1 bis 1000, bevorzugt 5 bis 500 und besonders bevorzugt 10 bis 100 ppm, bezogen auf die Gesamtmonomerenmasse verwendet.

Die Komponenten des erfindungsgemäß verwendeten Initiatorsystems werden zweckmäßigerweise zur Nachbehandlung der auf ca. 50 bis 130, bevorzugt 60 bis 120 und besonders bevorzugt auf 80 bis 100°C erhitzten Polymerdispersion bevorzugt bei Normaldruck, gegebenenfalls aber auch bei einem Druck von größer oder kleiner 1 bar (absolut), unter Rühren allmählich gleichzeitig oder nacheinander zudosiert, wobei im letzten Fall bevorzugt zuerst das Oxidationsmittel zugesetzt wird. Besonders günstig ist das gleichzeitige Zudosieren von Oxidations- und Reduktionsmittel über zwei separate Zuläufe. Dabei kann die Zugabe der Initiatorkomponenten beispielsweise von oben, unten oder durch die Seite des Reaktors erfolgen. Bevorzugt wird das Initiatorsystem jedoch von unten dosiert. Da die optimale Dauer der Initiatorzudosierung von der Monomerenzusammensetzung, der Größe des Reaktionsansatzes und der Reaktorgeometrie abhängig ist, ist es zweckmäßig, diese in Vorversuchen zu ermitteln. Abhängig von der gestellten Aufgabe, kann die Dauer der Initiatorzugabe wenige Sekunden bis mehrere Stunden betragen. Besonders günstig ist es, wenn die in katalytischen Mengen eingesetzte Metallverbindung der Polymerdispersion vor der Zugabe des Oxidations- und Reduktionsmittels zugesetzt wird.

Die Nachbehandlung wird üblicherweise bei einem pH-Wert ≤ 8 durchgeführt. Zur pH-Einstellung der Polymerdispersion können prinzipiell Basen, wie beispielsweise Natronlauge, Ammoniakwasser oder Triethanolamin verwendet werden. Für die Nachbehandlung der Polymerdispersion ist ein pH-Bereich von ≥ 2 und ≤ 8 günstig, bevorzugt ist ein pH-Bereich zwischen ≥ 3 und ≤ 7. Bei der pH-Einstellung mit Basen kann es unter ungünstigen Umständen zu lokalen Bereichen mit kurzfristig höheren pH-Werten kommen, in denen die katalysierenden Metallionen in schwerlösliche Hydroxide oder Hydroxo-Komplexe überführt würden. Zur Sicherstellung ausreichender Metallionen-Konzentrationen während der Nachbehandlung ist daher der Zusatz von Komplexiermitteln, wie beispielsweise Ethylendiamintetraessigsäure, Nitrilotriessigsäure und Diethylentriaminpentaessigsäure und/oder deren jeweiliger Natriumsalze und/oder die Verwendung von stabilen Metallionenkomplexen, wie beispielsweise Eisen-(III)/Natrium-Ethylendiamintetraacetat von besonderem Vorteil.

Das erfindungsgemäße Verfahren eignet sich besonders zur Verminderung der Restmonomerenmenge in wässrigen Polymerdispersionen, die durch radikalische Emulsionspolymerisation von wenigstens eine ethylenisch ungesättigte Gruppe aufweisenden Monomeren erhältlich sind.

Als wenigstens eine monoethylenisch ungesättigte Gruppe aufweisende Monomere kommen für das erfindungsgemäße Verfahren u.a. insbesondere in einfacher Weise radikalisch polymerisierbare Monomere in Betracht, wie beispielsweise die Olefine Ethylen, vinylaromatische Monomere wie Styrol, α-Methylstyrol, o-Chlorstyrol oder Vinyltoluole, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -isobutyl und -2-ethylhexylester, Maleinsäuredimethylester oder Maleinsäure-di-n-butylester, Nitrile α,β-monoethylenisch ungesättigter Carbonsäuren, wie Acrylnitril sowie C₄₋₈-konjugierte Diene, wie 1,3-Butadien und Isopren. Die genannten Monomere bilden im Fall von ausschließlich nach der Methode der radikalischen wässrigen Emulsionspolymerisation erzeugten wässrigen Polymerisatdispersionen in der Regel die Hauptmonomeren, die, bezogen auf die Gesamtmenge der nach dem Verfahren der radikalischen wässrigen Emulsionspolymerisation zu polymerisierenden Monomeren normalerweise einen Anteil von mehr als 50 Gew.-% auf sich vereinen. In aller Regel weisen diese Monomeren in Wasser bei Normalbedingungen (25 °C, 1 atm) lediglich eine mäßige bis geringe Löslichkeit auf.

Monomere, die unter den vorgenannten Bedingungen eine erhöhte Wasserlöslichkeit aufweisen, sind beispielsweise α,β-monoethylenisch ungesättigte Mono- und Dicarbonsäuren und deren Amide, wie z.B. Acrylsäure, Methacrylsäure, Maleinsäure, Fumarsäure, Itaconsäure, Acrylamid und Methacrylamid, ferner Vinylsulfonsäure und deren wasserlösliche Salze sowie N-Vinylpyrrolidon.

Im Fall von ausschließlich nach der Methode der radikalischen wässrigen Emulsionspolymerisation erzeugten wässrigen Polymerisatdispersionen werden die vorgenannten, eine erhöhte Wasserlöslichkeit aufweisenden Monomeren im Normalfall lediglich als modifizierende Monomere in Mengen, bezogen auf die Gesamtmenge der zu polymerisierenden Monomeren, von weniger als 50 Gew.-%, in der Regel 0,5 bis 20, vorzugsweise 1 bis 10 Gew.-% einpolymerisiert.

Monomere, die üblicherweise die innere Festigkeit der Verfilmungen der wässrigen Polymerisatdispersionen erhöhen, weisen normalerweise wenigstens eine Epoxy-, Hydroxy-, N-Methylol- oder Carbonylgruppe, oder wenigstens zwei nicht konjugierte ethylenisch ungesättigte Doppelbindungen auf. Beispiele hierfür sind N-Alkylolamide von 3 bis 10 C-Atome aufweisenden α,β-monoethylenisch ungesättigten Carbonsäuren, unter denen das N-Methylolacrylamid und das N-Methylolmethacrylamid ganz besonders bevorzugt sind sowie deren Ester mit 1 bis 4 C-Atomen aufweisenden Alkanolen. Daneben kommen auch zwei Vinylreste aufweisende Monomere, zwei Vinylidenreste aufweisende Monomere sowie zwei Alkenylreste aufweisende Monomere in Betracht. Besonders vorteilhaft sind dabei die Di-Ester zweiwertiger Alkohole mit α,β-monoethylenisch ungesättigten Monocarbonsäuren unter denen die Acrylund Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylate sowie Divinylbenzol, Vinylmethacrylat, Vinylacrylat, Allylmethacrylat, Allylacrylat, Diallymaleat, Diallylfumarat, Methylenbisacrylamid, Cyclopentadienylacrylat oder Triallylcyanurat. In diesem Zusammenhang von besonderer Bedeutung sind auch die Methacrylsäure- und Acrylsäure-C₁-C₈-Hydroxyalkylester, wie n-Hydroxyethyl-, n-Hydroxypropyl- oder n-Hydroxybutylacrylat und -methacrylat sowie Verbindungen, wie Diacetonacrylamid und Acetylacetoxyethylacrylat bzw. -methacrylat. Die vorgenannten Monomeren werden im Fall von ausschließlich nach der Methode der radikalischen wässrigen Emulsionspolymerisation erzeugten wässrigen Polymerisatdispersionen, bezogen auf die Gesamtmenge der zu polymerisierenden Monomeren, meist in Mengen von 0,5 bis 10 Gew.-% einpolymerisiert.

Die Herstellung wässriger Polymerdispersionen ist vielfach vorbeschrieben und dem Fachmann daher hinreichend bekannt [vgl. z.B. Encyclopedia of Polymer Science and Engineering, Vol. 8, S. 659ff (1987); D.C. Blackley, in High Polymer Latices, Vol. 1, S. 35ff (1966); Emulsion Polymerisation, Interscience Publishers, New York (1965) und Dispersionen synthetischer Hochpolymerer, F. Hölscher, Springer-Verlag, Berlin (1969)]. Sie erfolgt durch Emulsionspolymerisation von wenigstens eine olefinisch ungesättigte Gruppe aufweisenden Monomeren in Gegenwart eines bevorzugt wasserlöslichen Polymerisationsinitiators sowie in Gegenwart von Emulgatoren und ggf. Schutzkolloiden und üblichen weiteren Zusatzstoffen. In der Regel erfolgt hierbei der Zusatz der Monomeren durch kontinuierlichen Zulauf. Als Initiator ist die Verwendung von Peroxodischwefelsäure und/oder deren Salzen in Mengen von 0,1 bis 2 Gew.-%, bezogen auf die Gesamtmenge der Monomeren, bevorzugt. Die Polymerisationstemperatur beträgt im allgemeinen 20 bis 150 und bevorzugt 60 bis 120 °C. Die Polymerisation findet ggf. unter Druck statt. Als Emulgatoren werden insbesondere anionische Emulgatoren allein oder im Gemisch mit nichtionischen Dispergiermitteln in einer Menge von insbesondere 0,5 bis 6 Gew.-% der Gesamtmonomerenmenge eingesetzt.

Die erfindungsgemäße Nachbehandlung der wässrigen Polymerdispersion zur Verminderung der Restmonomerenmenge erfolgt insbesondere, nachdem die Gesamtmonomerenmenge in der radikalischen Emulsionspolymerisation zu mindestens 95 und bevorzugt zu mindestens 98 bis 99 Gew.-% umgesetzt wurde. Die Verhältnisse bei der Hauptpolymerisation und bei der Nachbehandlung sind im allgemeinen verschieden. So erfolgt während der Hauptpolymerisation bei hoher Konzentration an Monomeren und wachsenden und somit immer hydrophober werdenden Oligomerradikalen der Radikaleintritt in die Dispersionspartikel leicht, während dieser bei der Nachbehandlung generell aufgrund der geringen Monomerkonzentration und mangels wachsender Oligomerradikale sehr schwierig verläuft. Bei der Herstellung von wässrigen Polymerdispersionen sind daher in der Regel für die Hauptpolymerisation und die Nachbehandlung unterschiedliche Initiatorensysteme erforderlich.

Wie die Verfahren der radikalischen Polymerisation generell, erfolgt auch das erfindungsgemäße Verfahren in der Regel unter Inertgasatmosphäre (z.B. N₂, Ar).

Selbstverständlich ist es möglich, die nachbehandelnden wässrigen Polymerdispersionen einer Inertgas- und/oder Wasserdampfstrippung zuzuführen.

Die erfindungsgemäß einzusetzenden radikalischen Redoxinitiatorsysteme ermöglichen eine wirksame Restmonomerenabsenkung in relativ kurzer Zeit. Ferner ist von Bedeutung, daß das erfindungsgemäß beanspruchte Reduktionsmittel in der Regel wässrigen Polymerdispersionen als Konservierungsmittel zuzusetzende Microcide in vorteilhafter Weise nicht zu reduzieren vermag, weshalb eine Anwendung desselben im Überschuß die diesbezügliche Qualität der wässrigen Polymerdispersion nicht mindert.

### Beispiele

### Beispiel 1:

Eine Styrol/n-Butylacrylat-Dispersion, durch radikalische Polymerisation aus 23 kg Styrol, 25 kg n-Butylacrylat, 2 kg Acrylsäure, 1,2 kg Styrol-Saatlatex (34 Gew.-% in Wasser, Teilchengröße ca. 30 bis 35 nm), 45 g Natriumlaurylsulfat, 225 g Dowfax® 2A1 (Dodecylphenoxybenzoldisulfonsäurenatriumsalz), 75 g Natriumhydroxid, 150 g Natriumperoxodisulfat und 46,755 kg Wasser bei 80°C hergestellt, wies einen Feststoffgehalt von 52 Gew.-% und einen pH-Wert von 4,3 auf.

1298 g dieser Dispersion setzte man 52 g destilliertes Wasser zu, so daß eine Dispersion mit einem Feststoffgehalt von 50 % resultierte. Die auf 50 Gew.-% verdünnte Dispersion enthielt 7069 ppm n-Butylacrylat, 720 ppm Styrol und 2900 ppm Acrylsäure. In der Nachbehandlung erhitzte man die wässrige Polymerdispersion auf 85°C und setzte dann 0,02 g Eisen-EDTA-Komplex-Natriumsalz zu. Unter Rühren wurden anschließend gleichzeitig
a) 30 g einer 1,01 Gew.-%igen wässrigen Wasserstoffperoxidlösung
   und
b) 30 g einer Lösung, hergestellt aus 0,76 g einer wässrigen 89 Gew.-%igen Natriumdithionit-Lösung, 0,32 g Acetaldehyd (Ethanal) und 28,9 g Wasser
in zwei getrennten Zuläufen mit einer Zulaufgeschwindigkeit von jeweils 20 g pro Stunde eindosiert. Die dabei resultierenden n-Butylacrylat- und Styrol-Restmengen wurden gaschromatographisch, die Acrylsäure-Restmengen mittels HPLC bestimmt. Die in der Nachbehandlung erhaltenen Ergebnisse sind in Tabelle 1 dargestellt.

**Tabelle 1:**

| Restmonomerenmengen der wässrigen Polymerdispersion in der Nachbehandlung | | | |
|---|---|---|---|
| Zeit Min | Styrol ppm | n-Butylacrylat ppm | Acrylsäure ppm |
| 0 | 720 | 7069 | 2900 |
| 60 | 271 | 3840 | |
| 120 | 2 | 256 | |
| 240 | 2 | 249 | 80 |

### Beispiel 2:

Eine Styrol/n-Butylacrylat-Dispersion, durch radikalische Polymerisation aus 23 kg Styrol, 25 kg n-Butylacrylat, 2 kg Acrylsäure, 1,2 kg Styrol-Saatlatex (34 Gew.-% in Wasser, Teilchengröße ca. 30 bis 35 nm), 45 g Natriumlaurylsulfat, 225 g Dowfax® 2A1 (Dodecylphenoxybenzoldisulfonsäurenatriumsalz), 75 g Natriumhydroxid, 150 g Natriumperoxodisulfat und 46,755 kg Wasser bei 80°C hergestellt, wies einen Feststoffgehalt von 52 Gew.-% und einen pH-Wert von 4,3 auf.

1298 g dieser Dispersion setzte man 52 g destilliertes Wasser zu, so daß eine Dispersion mit einem Feststoffgehalt von 50 % resultierte. Die auf 50 Gew.-% verdünnte Dispersion enthielt 7522 ppm n-Butylacrylat, 778 ppm Styrol und 2900 ppm Acrylsäure. In der Nachbehandlung erhitzte man die wässrige Polymerdispersion auf 85°C und setzte dann 0,02 g Eisen-EDTA-Komplex-Natriumsalz zu. Unter Rühren wurden anschließend gleichzeitig
a) 30 g einer 0,68 Gew.-%igen wässrigen Wasserstoffperoxidlösung
   und
b) 30 g einer Lösung, hergestellt aus 0,51 g einer wässrigen 89 Gew.-%igen Natriumdithionit-Lösung, 0,21 g Acetaldehyd (Ethanal) und 29,3 g Wasser
in zwei getrennten Zuläufen mit einer Zulaufgeschwindigkeit von jeweils 10 g pro Stunde eindosiert. Die dabei resultierenden n-Butylacrylat- und Styrol-Restmengen wurden gaschromatographisch, die Acrylsäure-Restmengen mittels HPLC bestimmt. Die in der Nachbehandlung erhaltenen Ergebnisse sind in Tabelle 2 dargestellt.

**Tabelle 2:**

| Restmonomerenmengen der wässrigen Polymerdispersion in der Nachbehandlung | | | |
|---|---|---|---|
| Zeit Min | Styrol ppm | n-Butylacrylat ppm | Acrylsäure ppm |
| 0 | 778 | 7522 | 2900 |
| 60 | 298 | 4326 | |
| 120 | 2 | 923 | |
| 240 | 2 | 289 | 10 |

### Beispiel 3:

Eine Styrol/Butadien-Dispersion wurde durch radikalische Polymerisation aus 6 kg Styrol, 8,4 kg 1,3-Butadien, 3,6 kg Acrylsäure, 0,41 kg Styrol-Saatlatex (34 Gew.-% in Wasser, Teilchengröße ca. 30 bis 35 nm), 135 g Texapon® NSO (Natriumlaurylethersulfat mit durchschnittlich 2,5 Ethylenoxideinheiten), 15 g Natriumhydroxid, 110 g Natriumperoxodisulfat und 18,28 kg Wasser bei 82°C hergestellt. Überschüssiges 1,3-Butadien entfernte man, indem man der auf 68°C abgekühlten Dispersion unter Rühren 2 bar Stickstoff aufpresste, entspannte und einen leichten Unterdruck (750 mbar absolut) anlegte und diesen Vorgang automatisiert ca. 1500-mal wiederholte. Nach 4 Stunden wurde eine Dispersion erhalten, die einen Feststoffgehalt von 51,3 Gew.-%, einen pH-Wert von 4,8 und Restmonomerengehalte von 1845 ppm Styrol und 280 ppm Acrylsäure aufwies.

In der Nachbehandlung erhitzte man 1350 g dieser wässrigen Polymerdispersion auf 85°C und setzte 0,02 g Eisen-EDTA-Komplex-Natriumsalz zu. Unter Rühren wurden anschließend gleichzeitig
a) 30 g einer 0,69 Gew.-%igen wässrigen Wasserstoffperoxidlösung
   und
b) 30 g einer Lösung, hergestellt aus 0,52 g einer wässrigen 89 Gew.-%igen Natriumdithionit-Lösung, 0,22 g Acetaldehyd (Ethanal) und 29,3 g Wasser
in zwei getrennten Zuläufen mit einer Zulaufgeschwindigkeit von jeweils 20 g pro Stunde eindosiert. Die dabei resultierenden Styrol-Restmengen wurden gaschromatographisch und die Acrylsäure-Restmengen mittels HPLC bestimmt. Die in der Nachbehandlung erhaltenen Ergebnisse sind in Tabelle 3 dargestellt.

**Tabelle 3:**

| Restmonomerenmengen der wässrigen Polymerdispersion in der Nachbehandlung | | |
|---|---|---|
| Zeit Min | Styrol ppm | Acrylsäure ppm |
| 0 | 1845 | 280 |
| 60 | 1072 | |
| 120 | 770 | |
| 180 | 759 | 10 |

## Patentansprüche

1. Verfahren zur Verminderung der Restmonomerenmenge in wässrigen Polymerdispersionen durch Nachbehandlung mit einem Initiatorsystem, **dadurch gekennzeichnet, daß** man die Nachbehandlung in der wässrigen Polymerdispersion unter Zugabe eines Initiatorensystems durchführt, das im wesentlichen
a) 0,001 bis 5 Gew.-%, bezogen auf die zur Herstellung der Polymerdispersion verwendeten Gesamtmonomerenmenge
a₁) eines Oxidationsmittels
R¹OOH,
worin R¹ Wasserstoff, eine C₁- bis C₈-Alkyl- oder eine C₆bis C₁₂-Arylgruppe bedeutet, und/oder
a₂) einer in wässrigem Medium Wasserstoffperoxid freisetzende Verbindung, und
b) 0,005 bis 5 Gew.-%, bezogen auf die zur Herstellung der Polymerdispersion verwendeten Gesamtmonomerenmenge eines Reduktionsmittels, hergestellt aus
b₁) einem Aldehyd
R²CH=O,
worin R² eine C₁- bis C₁₂-Alkylgruppe bedeutet, die funktionelle Gruppen enthalten und/oder olefinisch ungesättigt sein kann, und
b₂) einem anorganischen Dithionit und
c) katalytische Mengen eines mehrwertigen Metallions, das in mehreren Wertigkeitsstufen auftreten kann
umfaßt.

2. Verfahren nach Anspruch 1, **dadurch gekennzeichnet, daß** das Oxidationsmittel eine anorganische Verbindung ist.

3. Verfahren nach Anspruch 1, **dadurch gekennzeichnet, daß** das Oxidationsmittel Wasserstoffperoxid ist.

4. Verfahren nach Anspruch 1, **dadurch gekennzeichnet, daß** R² eine Methylgruppe ist.

5. Verfahren nach Anspruch 1, **dadurch gekennzeichnet, daß** im Reduktionsmittel Aldehyd und Dithionit im molaren Verhältnis von 0,1 zu 1 bis 1 zu 0,1 eingesetzt werden.

6. Verfahren nach Anspruch 1, **dadurch gekennzeichnet, daß** man zur Herstellung des Reduktionsmittels Natriumdithionit verwendet.

7. Verfahren nach Anspruch 1, **dadurch gekennzeichnet, daß** man das Oxidationsmittel und das Reduktionsmittel der Polymerdispersion während der Nachbehandlung gleichzeitig in separaten Zuläufen zuführt.

8. Verfahren nach Anspruch 1, **dadurch gekennzeichnet, daß** man die Metallionen der Polymerdispersion in der Nachbehandlung vor dem Oxidations- und Reduktionsmittel zusetzt.

9. Verfahren nach Anspruch 1, **dadurch gekennzeichnet, daß** man als mehrwertiges Metallion Eisenionen einsetzt.

10. Verfahren nach Anspruch 1, **dadurch gekennzeichnet, daß** man die Eisenionen in komplexierter Form zusetzt.

11. Verfahren nach Anspruch 1, **dadurch gekennzeichnet, daß** die Temperatur der Polymerdispersion während der Nachbehandlung 50 bis 130°C beträgt.

12. Verfahren nach Anspruch 1, **dadurch gekennzeichnet, daß** man die Nachbehandlung im Überdruck, bei Normaldruck (1 bar absolut) oder im Unterdruck durchführt.

13. Verfahren nach Anspruch 1, **dadurch gekennzeichnet, daß** der pH-Wert der Polymerdispersion während der Nachbehandlung ≥ 2 und ≤ 8 ist.

## Claims

1. A process for reducing the amount of residual monomer in aqueous polymer dispersions by aftertreatment with an initiator system, which comprises said aftertreatment in the aqueous polymer dispersion being accompanied by the addition of an initiator system essentially comprising
a) from 0.001 to 5% by weight, based on the total monomer amount used to prepare the polymer dispersion,
a₁) of an oxidizing agent
R¹OOH,
where R¹ is hydrogen or a C₁-C₈-alkyl or a C₆-C₁₂-aryl group, and/or
a₂) of a compound which in aqueous medium releases hydrogen peroxide, and
b) from 0.005 to 5% by weight, based on the total monomer amount used to prepare the polymer dispersion, of a reducing agent prepared from
b₁) an aldehyde
R²CH=O,
where R² is a C₁-C₁₂-alkyl group which may contain functional groups and/or may be olefinically unsaturated, and
b₂) an inorganic dithionite, and
c) catalytic amounts of a polyvalent metal ion which is able to exist in a plurality of valence states.

2. A process as claimed in claim 1, wherein the oxidizing agent is inorganic compound.

3. A process as claimed in claim 1, wherein the oxidizing agent is hydrogen peroxide.

4. A process as claimed in claim 1, wherein R² is a methyl group.

5. A process as claimed in claim 1, wherein, in the reducing agent, aldehyde and dithionite are employed in a molar ratio of from 0.1:1 to 1:0.1.

6. A process as claimed in claim 1, wherein sodium dithionite is used to prepare the reducing agent.

7. A process as claimed in claim 1, wherein the oxidizing agent and the reducing agent are supplied simultaneously in separate feed streams to the polymer dispersion during the aftertreatment.

8. A process as claimed in claim 1, wherein the metal ions are added to the polymer dispersion in the aftertreatment prior to the oxidizing and reducing agent.

9. A process as claimed in claim 1, wherein iron ions are employed as polyvalent metal ion.

10. A process as claimed in claim 1, wherein the iron ions are added in complexed form.

11. A process as claimed in claim 1, wherein the temperature of the polymer dispersion during the aftertreatment is from 50 to 130°C.

12. A process as claimed in claim 1, wherein the aftertreatment is conducted at superatmospheric pressure, at atmospheric pressure (1 bar absolute) or at subatmospheric pressure.

13. A process as claimed in claim 1, wherein the pH of the polymer dispersion during the aftertreatment is ≥ 2 and ≤ 8.

## Revendications

1. Procédé de réduction de la quantité de monomères résiduels dans des dispersions aqueuses de polymère au moyen d'un retraitement avec un système d'amorçage, **caractérisé en ce que** l'on réalise le retraitement dans la dispersion aqueuse de polymère en ajoutant un système d'amorçage qui comprend principalement
a) 0,001% à 5% en poids, par rapport à la quantité totale de monomères utilisés pour préparer la dispersion de polymère
a₁) un oxydant
R¹OOH,
dans lequel R¹ représente un atome d'hydrogène, un groupe alkyle en C₁ à C₈ ou un groupe aryle en C₆ à C₁₂, et/ou
a₂) un combiné libérant un peroxyde d'hydrogène en milieu aqueux, et
b) 0,005% à 5% en poids, par rapport à la quantité totale de monomères utilisés pour préparer la dispersion de polymère, d'un agent réducteur préparé à partir
b₁) d'un aldéhyde
R²CH=O,
dans lequel R² représente un groupe alkyle en C₁ à C₁₂ peut contenir des groupes fonctionnels et/ou qui peut être à insaturation oléfinique, et
b₂) d'un dithionite inorganique et
c) des quantités catalytiques d'un ion métallique multivalent qui peut être de plusieurs valences.

2. Procédé selon la revendication 1, **caractérisé en ce que** l'oxydant est un composé inorganique.

3. Procédé selon la revendication 1, **caractérisé en ce que** l'oxydant est le peroxyde d'hydrogène.

4. Procédé selon la revendication 1, **caractérisé en ce que** R² est un groupe méthyle.

5. Procédé selon la revendication 1, **caractérisé en ce que**, l'aldéhyde et le dithionite présents dans l'agent réducteur sont utilisés dans un rapport molaire allant de 0,1 à 1 jusqu'à 1 à 0,1.

6. Procédé selon la revendication 1, **caractérisé en ce que** l'on utilise le dithionite de sodium pour la préparation de l'agent réducteur.

7. Procédé selon la revendication 1, **caractérisé en ce que** l'on ajoute l'oxydant et l'agent réducteur à la dispersion de polymère, pendant le retraitement, simultanément dans des alimentations séparées.

8. Procédé selon la revendication 1, **caractérisé en ce que** l'on ajoute les ions métalliques à la dispersion de polymères dans le retraitement avant l'oxydant et l'agent réducteur.

9. Procédé selon la revendication 1, **caractérisé en ce que** l'on utilise des ions de fer en tant que ion métallique multivalent.

10. Procédé selon la revendication 1, **caractérisé en ce que** l'on ajoute les ions de fer sous forme de complexe.

11. Procédé selon la revendication 1, **caractérisé en ce que** la température de la dispersion de polymère pendant le retraitement va de 50°C à 130°C.

12. Procédé selon la revendication 1, **caractérisé en ce que** l'on réalise le retraitement sous une surpression, sous la pression normale (1 bar absolu) ou sous une dépression.

13. Procédé selon la revendication 1, **caractérisé en ce que** le pH de la dispersion de polymère pendant le retraitement est ≥ 2 et ≤ 8.
